# EUROPÄISCHE PATENTSCHRIFT

(11) **EP 1 192 201 B1**
(45) Veröffentlichungstag und Bekanntmachung des Hinweises auf die Patenterteilung: **25.02.2004**
(21) Anmeldenummer: 00940300.7
(22) Anmeldetag: 02.06.2000
(51) Int. Cl.: C08G 18/40, C08G 18/66, C08G 18/42

(54) **POLYHARNSTOFFPOLYURETHANE MIT VERBESSERTEN PHYSIKALISCHEN EIGENSCHAFTEN UND VERFAHREN ZU DEREN HERSTELLUNG**
POLYUREA POLYURETHANES HAVING IMPROVED PHYSICAL PROPERTIES AND METHOD OF THEIR PREPARATION
POLYUREE-POLYURETHANNES A PROPRIETES PHYSIQUES AMELIOREES ET PROCEDE DE LEUR PREPARATION

(30) Priorität: 15.06.1999 DE 19927188
(43) Veröffentlichungstag der Anmeldung: 03.04.2002
(73) Patentinhaber: Bayer Aktiengesellschaft, 51368 Leverkusen (DE)
(72) Erfinder: ARNTZ, Hans-Detlef, D-53797 Lohmar (DE); BRECHT, Klaus, D-51399 Burscheid (DE); JOHN, Bernhard, D-51375 Leverkusen (DE); SEIFERT, Peter, D-53797 Lohmar (DE); SCHNEIDER, Michael, D-51061 Köln (DE)
(86) Internationale Anmeldenummer: PCT/EP2000/005036
(87) Internationale Veröffentlichungsnummer: WO 2000/077064

(56) Entgegenhaltungen:
- EP-A- 0 279 276
- EP-A- 0 379 149
- US-A- 4 124 572
- US-A- 4 945 016

## Beschreibung

Die Erfindung betrifft ein Verfahren zur Herstellung von öl- und benzinbeständigen zelligen bis massiven (Polyhamstoff)polyurethanen (PUR) mit verbesserten physikalischen Eigenschaften, wie sie z.B. bei persönlicher Schutzausrüstung und im Automobilbau benötigt werden.

Die große Vielfalt von Polyurethankunststoffen, deren Aufbau und Herstellverfahren ist seit vielen Jahren Stand der Technik. In WO 98/23659 sind Polyetherpolyurethane beschrieben, die bedingt benzinbeständig sind. Jedoch quellen diese beim Kontakt mit Kohlenwasserstoffen deutlich und verändern dabei ihre mechanischen und physikalischen Eigenschaften. Zudem werden bei der Verarbeitung von Polyetherpolyurethanen zu Formteilen die Formen stark verschmutzt.

Die daher bislang in solchen Anwendungen meist eingesetzten Polyester-PUR weisen die folgenden Nachteile auf:
- hohe Viskosität der verarbeitungsfertigen Komponenten führt zu Nachteilen in der Abbildungstreue bei Formteilen;
- die zur Verarbeitung notwendige Temperatur von 40-60°C reduziert die Haltbarkeit der Systemkomponenten;
- ungenügende Hydrolyse- und Mikrobenbeständigkeit führt zu einer eingeschränkten Lebensdauer der Produkte;
- die Steuerung der Polyadditionsreaktion durch Katalysatoren ist eingeschränkt, da diese vielfach die Glykolyse des Esters fördern.

In US 4 124 572, insbesondere Beispiel 4 wird ein Polyurethan mit einer Härte von 88 Shore A hergestellt. Als Komponente werden ein Polyoxypropylenpolyoxyethylenglycol mit einem Molekulargewicht von 2000, ein Polyesterdiol mit einem Molekulargewicht von 1500 auf Basis 1,6-Hexandiol, Adipinsäure und Isophthalsäure, 1,4-Butandiol sowie 4,4'-Methylenbis(phenylisocyanat) eingesetzt.

Es wurde nun gefunden, daß bereits ein Zusatz von nur 3 bis 30 % Gew. spezieller Polyesterpolyole in bekannte Polyetherpolyurethane deren Quellbeständigkeit in Öl und Benzin deutlich verbessert.

Gegenstand der Erfindung sind öl- und benzinbeständige zellige bis massive (Polyharnstoff)polyurethane, erhältlich durch Umsetzung eines Reaktionsgemisches aus
A1) 95 bis 70 Gew.-%, bezogen auf die Summe aus A1) und A2), einer Polyetherpolyolkomponente mit einem zahlenmittleren Molekulargewicht von 1000 bis 8000 g/mol, bevorzugt 2000 bis 6000 g/mol, und mit einer Hydroxylfunktionalität von 2,0 oder einer Mischung mit einer mittleren Hydroxylfunktionalität von 2,02 bis 2,95, bestehend aus
   a) mindestens einem Polyetherdiol des Hydroxylzahlbereichs 10 bis 115, welches durch Propoxylierung eines difunktionellen Starters und anschließender Ethoxylierung des Propoxylierungsproduktes unter Einhaltung eines Gewichtsverhältnisses von Propylenoxid zu Ethylenoxid von 60:40 bis 85: 15 hergestellt worden ist und
   b) mindestens einem, gegebenenfalls Füllstoffe auf Basis von Styrol-Acrylnitril-Copolymerisaten, Polyharnstoffen oder Polyhydrazocarbonamiden in einer Menge von bis zu 20 Gew.-%, bezogen auf das Gesamtgewicht der Komponente b), enthaltendem Polyethertriol des Hydroxylzahlbereichs 12 bis 56, welches durch Propoxylierung eines trifunktionellen Starters und anschließender Ethoxylierung des Propoxylierungsproduktes unter Einhaltung eines Gewichtsverhältnisses von Propylenoxid zu Ethylenoxid von 60:40 bis 85:15 hergestellt worden ist,
A2) 5 bis 30 Gew.-%, bezogen auf die Summe aus A1) und A2), einer Polyesterpolyolkomponente mit einem zahlenmittleren Molekulargewicht von 1000 bis 6000 g/mol, bevorzugt 1000 bis 4000 g/mol, die aus Polyesterpolyolen besteht, die 20 bis 50 mol-% von Adipinsäure abgeleitete Einheiten, 0 bis 20 mol-% von Glutarsäure abgeleitete Einheiten, 0 bis 10 mol-% von Bemsteinsäure abgeleitete Einheiten, 10 bis 30 mol-% von Neopentylglykol abgeleitete Einheiten, 10 bis 40 mol-% von Hexandiol abgeleitete Einheiten, 0 bis 15 mol-% von Ethandiol abgeleitete Einheiten und 0 bis 5 mol-% von Butandiol abgeleitete Einheiten aufweisen,
B) einer Polyisocyanat-Komponente
C) Kettenverlängerungsmitteln,
   gegebenenfalls
D) Treibmitteln und
E) Aktivatoren und weiteren Hilfs- und Zusatzmitteln,
wobei die Ausgangsmaterialien unter Einhaltung der Isocyanatkennzahl von 70 bis 130 zur Reaktion gebracht werden.

Als Komponente A2) finden Polyesterpolyole mit einem zahlenmittleren Molekulargewicht von 1000 bis 6000 g/mol Einsatz, welche beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 Kohlenstoffatomen hergestellt werden können. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- und/oder - diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure.

Beispiele für zwei- und mehrwertige Alkohole, insbesondere Diole und Alkylenglykole sind: Ethandiol, Diethylenglykol, 1,2- bzw. 1,3-Propandiol, Dipropylenglykol, Methyl-Propandiol-1,3, 1,4-Butandiol, 1,5-Pentandiol 1,6-Hexandiol, Neopentylglykol, 1,10-Decandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, Diethylenglykol, 1,4-Butandiol, Isobutylglykol, 1,3-Propandiol, 1,2-Propandiol, Neopentylglykol, 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z.B. o-Hydroxycapronsäure und Hydroxyessigsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder in Gegenwart von Veresterungskatalysatoren, zweckmäßigerweise in einer Atmosphäre aus Inertgasen, wie z.B. Stickstoff, Kohlenmonoxid, Helium, Argon und auch in der Schmelze bei Temperaturen von 150 bis 300°C, vorzugsweise 180 bis 230°C, gegebenenfalls unter vermindertem Druck, bis zu der gewünschten Säurezahl, die vorteilhafterweise kleiner als 10, vorzugsweise kleiner als 1 ist, polykondensiert werden.

Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 10 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate mit mehrwertigen Alkoholen vorteilhafterweise im Molverhältnis von 1 : 1 bis 1,8, vorzugsweise 1 : 1,05 bis 1,2 polykondensiert. Die erhaltenen Polyesterpolyole besitzen vorzugsweise eine Funktionalität von 2 bis 3, insbesondere 2 bis 2,6 und ein zahlenmittleres Molekulargewicht von 400 bis 6 000, vorzugsweise 800 bis 3500.

Als geeignete Polyesterpolyole sind ferner Hydroxylgruppen aufweisende Polycarbonate zu nennen. Als Hydroxylgruppen aufweisende Polycarbonate kommen solche der an sich bekannten Art in Betracht, die beispielsweise durch Umsetzung von Diolen, wie 1,2-Propandiol, 1,4-Butandiol, 1,6-Hexandiol, Diethylenglykol, Trioxyethylenglykol und/oder Tetraoxyethylenglykol mit Diarylcarbonaten, z.B. Diphenylcarbonat oder Phosgen hergestellt werden können.

Polyesterpolyole der folgenden Zusammensetzung (angegeben sind die Verbindungen, von denen sich die Bausteine der Wiederholungseinheiten des Polyols ableiten sind besonders gut für die Herstellun der erfindungsgemäßen (Polyhamstoff)polyurethane geeignet:

| | |
|---|---|
| Adipinsäure | 20-50 mol-%, bevorzugt 40-48 mol-% |
| Glutarsäure | 0-20 mol%, bevorzugt 0 mol-% |
| Bernsteinsäure | 0-10 mol-%, bevorzugt 0 mol-% |
| Neopentylglykol | 10-30 mol-%, bevorzugt 19-23 mol-% |
| Hexandiol | 10-40 mol-%, bevorzugt 30-35 mol-% |
| Ethandiol | 0-15 mol-%, bevorzugt 0-5 mol-% |
| Butandiol | 0-5 mol-% |

Bevorzugt werden Polyesterpolyole der folgenden Zusammensetzungen eingesetzt:
1. 47,1 mol-% Adipinsäure, 19,4 mol-% Neopentylglykol, 30,6 mol-% Hexandiol, 2,9 mol-% Butandiol;
2. 47,1 mol-% Adipinsäure, 19,4 mol-% Neopentylglykol, 30,6 mol-% Hexandiol, 2,9 mol-% Ethandiol;
3. 47,1 mol-% Adipinsäure, 19,4 mol-% Neopentylglykol, 30,1 mol-% Hexandiol, 1,7 mol-% Butandiol, 1,7 mol-% Ethandiol.

Polyesterpolyole dieser Zusammensetzung sind mit den unter A1) beschriebenen Polyetherpolyolen in weiten Grenzen mischbar und zeigen-keine Separationstendenz. Im Gegensatz hierzu separieren die handelsüblichen Ethandiol-butandiol-1,4-polyadipate (z.B. Bayflex® 2002H, Bayer AG) bereits ab einer Konzentration von 5 Gew.-% in den genannten Polyetherpolyolen.

Durch den Zusatz dieser Polyesterpolyole werden die physikalisch mechanischen Eigenschaften des PUR im positiven Sinne beeinflußt, ohne daß die negativen Eigenschaften von Polyesterpolyolen erkennbar werden. Der Einsatz dieser zu Polyetherpolyolen kompatiblen Ester ermöglicht eine gezielte Eigenschaftsoptimierung der erfindungsgemäßen (Polyharnstoff)polyurethane, da Polyolmischungen eingesetzt werden können, die zwischen 70 bis 95 Gew.-% Ether und 5 bis 30 Gew.-% Ester enthalten. Ein weiterer Vorteil ist, daß mit solchen Polyolmischungen transparente Materialien in jeder dieser Zusammensetzungen hergestellt werden können.

Als Komponente B) dienen die technisch leicht zugänglichen Polyisocyanate wie Diisocyanatodiphenylmethan, Toluoldiisocyanat sowie Mischungen aus diesen mit teilweise carbodiimidisierten Isocyanaten in vorverlängerter Form mit einem NCO-Gehalt von 5 bis 30 Gew.-%. Zur Vorverlängerung werden Polyether oder Polyester bzw. Mischungen des unter Komponente A1) und A2) beschriebenen Aufbaus genutzt, die eine Hydroxylfunktionalität von 2 bis 2,5 aufweisen.

Als Komponente C) werden Ethandiol, Diethylenglykol, Butandiol, Methylpropandiol, Propylenglykol, Triethanolamin, Glycerin, Diaminoethyltoluylen oder Mischungen aus diesen Verbindungen, als Komponente D) gegebenenfalls Wasser und/oder ein physikalisches Treibmittel, z.B. R 134a (Hydrofluoralkangemisch) eingesetzt.

Als Katalysatoren und gegebenenfalls mitzuverwendende Hilfs und Zusatzmittel E) dienen die aus der Literatur bekannten Aktivatoren, wie z.B. tertiäre Amine, Zinn-, Titanverbindungen und je nach Anforderungsprofil oberflächenaktive Substanzen, Schaumstabilisatoren, Zellregler, innere Trennmittel, Farbstoffe, Pigmente, Hydrolyseschtuzmittel, fungistatisch und bakteriostatisch wirkende Substanzen, Oxidations-, Lichtschutzmittel und Antistatika

Die Herstellung der erfindungsgemäßen (Polyharnstoff)polyurethane erfolgt nach den dem Fachmann im Prinzip bekannten Methoden. Dabei werden im allgemeinen die Komponenten A) sowie C) bis E) zu einer Polyolkomponente vereinigt und einstufig mit der Isocyanatkomponente B) zur Reaktion gebracht, wobei man sich der üblichen Zweikomponenten-Mischaggregate bedient. Die Komponente A2) kann hierbei sowohl Bestandteil der Polyol- als auch der Isocyanatkomponente sein.

Die resultierenden PUR-Qualitäten sind insbesondere zur Herstellung von Schuhsohlen geeignet, die der Sicherheitsschuhnorm EN 344 genügen, können aufgrund ihrer hohen dynamischen Belastbarkeit aber auch für Räder, Rollen und Reifen eingesetzt werden.

### Beispiele 1-6

### Ausgangsmaterialien

Polyhydroxylverbindungen A
   - A1:: Mit Trimethylolpropan und Propylenglykol gestarteter Propylenoxid/Ethylenoxid-Random-Blockpolyether; OH-Zahl 28; Funktionalität 2,1;
   - A2a:: Ethandiol-butandiol-1,4-polyadipat; OH-Zahl 56; Funktionalität 2;
   - A2b:: Polyesterpolyol enthalten 47,1 mol-% von Adipinsäure abgeleitete Einheiten, 19,4 mol-% von Neopentylglykol abgeleitete Einheiten, 30,6 mol-% von Hexandiol abgeleitete Einheiten und 2,9 mol-% von Butandiol abgeleitete Einheiten;
Polyisocyanat B
   - B:: Softsegmentprepolymer mit zahlenmittlerem Molekulargewicht 4000, Umsetzungsprodukt von MDI mit TPG und einem PO/EO Random-BlockPolyetherdiol, NCO-Wert: 17 Gew.-%;
Kettenverlängerungsmittel C
   Butandiol;
Katalysator E
   Mischung aus Diazabicyclooctan (DABCO) und Dibutylzinndilaurat (DBTDL) im Verhältnis von ca. 96:4.

### Versuchsdurchführung

Gemäß den Angaben in Tabelle 1 wurden die Komponenten A1, A2 und C gemischt und auf einer üblichen Zweikomponentenmisch- und -dosieranlage nach dem Niederdruckverfahren mit den Isocyanaten B1 bzw. B2 umgesetzt und in eine Aluminiumform eingetragen, deren Oberfläche nicht zusätzlich behandelt oder mit externen Trennmitteln versehen war. Nach einer Reaktionszeit von 2,5 bis 4 Minuten wurde das Formteil entnommen. Die Ermittlung der mechanischen Eigenschaften wurde 48 Stunden nach der Fertigung der Prüfplatten (200 x 200 x 10 mm³) durchgeführt, aus denen die üblichen in den Normen (DIN 53504 S 1 Stab, DIN 53507 Weiterreißfestigkeit, Abrieb DIN 53516; Öl- und Benzinbeständigkeit DIN EN 344) beschriebenen Prüfkörper hergestellt und vermessen wurden. Die Ergebnisse sind in Tabelle 1 zusammengefaßt.

**Tabelle I**

| Beispiel | 1 * | 2* | 3 | 4 | 5 | 6 |
|---|---|---|---|---|---|---|
| A1 [Gew.-%] | 91,3 | 81,27 | 81,27 | 71,27 | 61,27 | 47,18 |
| A2a [Gew.-%] | - | 10,0 | - | - | - | - |
| A2b [Gew.-%] | - | - | 10,0 | 20,0 | 30,0 | 40,0 |
| C [Gew.-%] | 8,0 | 8,0 | 8,0 | 8,0 | 8,0 | 12,0 |
| E [Gew.-%] | 0,73 | 0,73 | 0,73 | 0,73 | 0,73 | 0,52 |
| D: Wasser [Gew.-%] | - | - | - | - | - | 0,3 |
| Phasenstabil | Ja | Nein | Ja | Ja | Ja | Ja |
| B [Gew.-%] | 55 | 55 | 55 | 54 | 53 | 89 |
| Rohdichte [kg/m³] | 950 | 950 | 950 | 950 | 950 | 600 |
| Härte [Shore A] | 60 | 60 | 60 | 60 | 60 | 55 |
| Zugfestigkeit [MPas] | 9,5 | 10,0 | 9,9 | 11,5 | 9,1 | 5,4 |
| Bruchdehnung [%] | 660 | 630 | 640 | 610 | 550 | 520 |
| Weiterreißwiderstand [kN/m] | 13,5 | 12,0 | 13,2 | 12,9 | 12,2 | 6,5 |
| Abrieb [mg] | 150 | 140 | 130 | 120 | 105 | 180 |
| Volumenänderung in Isooctan [%] | 11 | 10 | 9 | 6 | 3,5 | 11 |

| | | | | | | |
|---|---|---|---|---|---|---|
| * nicht erfindungsgemäßes Vergleichsbeispiel | | | | | | |

Während mit den üblichen Esterfbrmulierungen die Formen wöchentlich gereinigt werden müssen, ist es bei Verarbeitung von Polyetherformulierungen üblich, die Formen täglich zu reinigen. Mit den neuen Hybridformulierungen können ohne erkennbaren Formenaufbau ca. 800 Entformungen durchgeführt werden, was etwa einem Reinigungscyclus von 4 Tagen entspricht.

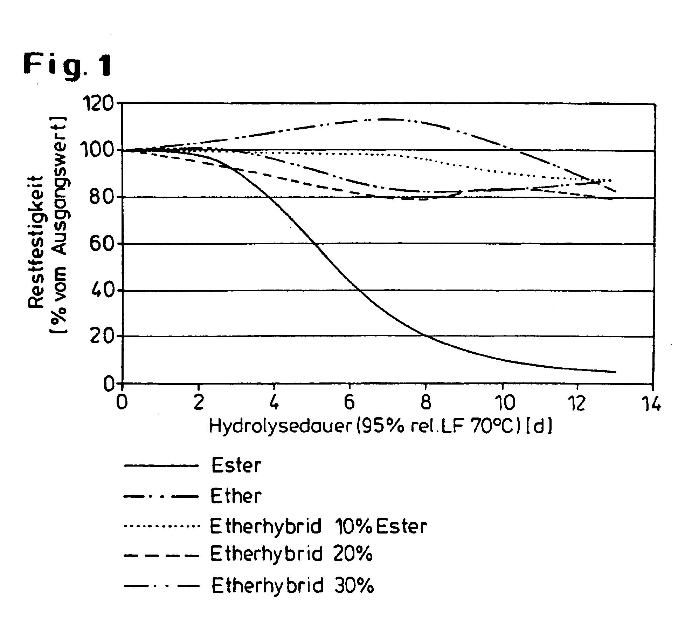

In einem Erdvergrabetest unter definierten Bedingungen (30°C, 95 % rel. Luftfeuchtigkeit in mit Schimmelpilzen angereicherter Humuserde während 8 Wochen) kann gezeigt werden, daß der Zusatz des Esters die Langzeitbeständigkeit gegenüber mikrobiellem Abbau nicht beeinträchtigt. Reine Esterpolyurethane weisen unter diesen Bedingungen bereits nach vier Wochen deutliche Risse in der Materialoberfläche auf. Ähnlich positive Ergebnisse werden auch in einem sterilen Hydrolysetest erhalten, bei dem die Prüfkörper bei 70°C, 95 % rel. Luftfeuchtigkeit über einen Zeitraum von 7 bis 14 Tagen gealtert werden (Fig.1).

Bei Versuchen mit verschiedenen Sohlenfomen zeigte sich eine Abnahme der Blasenhäufigkeit im Rahmenbereich der Sohle, wenn die reine Polyetherformulierung durch durch die höherviskosen Ether/Ester-Formulierungen ersetzt wurde.

## Patentansprüche

1. Verfahren zur Herstellung öl- und benzinbeständiger zelliger bis massiver (Polyharnstoff)polyurethane durch Umsetzung eines Reaktionsgemisches aus
A1) 95-70 Gew.-%, bezogen auf die Summe aus A1) und A2), einer Polyetherpolyolkomponente mit einem zahlenmittleren Molekulargewicht von 1000 bis 8000 g/mol und mit einer Hydroxylfunktionalität von 2,0 oder einer Mischung mit einer mittleren Hydroxylfunktionalität von 2,02 bis 2,95, bestehend aus
a) mindestens einem Polyetherdiol des Hydroxytzahlbereichs 10 bis 115, welches durch Propoxylierung eines difunktionellen Starters und anschließender Ethoxylierung des Propoxylierungsproduktes unter Einhaltung eines Gewichtsverhältnisses von Propylenoxid zu Ethylenoxid von 60:40 bis 85:15 hergestellt worden ist und
b) mindestens einem, gegebenenfalls Füllstoffe auf Basis von Styrol-Acrylnitril-Copolymerisaten, Polyharnstoffen oder Polyhydrazocarbonamiden in einer Menge von bis zu 20 Gew.-%, bezogen auf das Gesamtgewicht der Komponente b), enthaltendem Polyethertriol des Hydroxylzahlbereichs 12 bis 56, welches durch Propoxylierung eines trifunktionellen Starters und anschließender Ethoxylierung des Propoxylierungsproduktes unter Einhaltung eines Gewichtsverhältnisses von Propylenoxid zu Ethylenoxid von 60:40 bis 85:15 hergestellt worden ist,
A2) 5 bis 30 Gew.-%, bezogen auf die Summe aus A1) und A2), einer Polyesterpolyolkomponente mit einem zahlenmittleren Molekulargewicht von 1000 bis 6000 g/mol, die aus Polyesterpolyolen besteht, die 20 bis 50 mol-% von Adipinsäure abgeleitete Einheiten, 0 bis 20 mol-% von Glutarsäure abgeleitete Einheiten, 0 bis 10 mol-% von Bernsteinsäure abgeleitete Einheiten, 10 bis 30 mol-% von Neopentylglykol abgeleitete Einheiten, 10 bis 40 mol-% von Hexandiol abgeleitete Einheiten, 0 bis 15 mol-% von Ethandiol abgeleitete Einheiten und 0 bis 5 mol-% von Butandiol abgeleitete Einheiten aufweisen,
B) einer Polyisocyanat-Komponente
C) Kettenverlängerungsmitteln,
gegebenenfalls
D) Treibmitteln und
E) Aktivatoren und weiteren Hilfs- und Zusatzmitteln,
wobei die Ausgangsmaterialien unter Einhaltung der Isocyanatkennzahl von 70 bis 130 zur Reaktion gebracht werden.

2. Verfahren gemäß Anspruch 1, bei dem die Komponente A2) als Bestandteil der Polyisocyanatkomponente B) eingesetzt wird.

3. Verfahren gemäß Anspruch 1, bei dem die Komponenten A1), A2), C) und gegebenenfalls D) und E) zu einer Polyolkomponente vereinigt und diese mit der Polyisocyanatkomponente B) umgesetzt wird.

4. Öl- und benzinbeständige, zellige bis massive (polyharnstoff)polyurethane, erhältlich gemäß einem der Ansprüche 1 bis 3.

5. Transparente (Polyharnstoff)polyurethane gemäß Anspruch 4.

6. Hydrolyse- und mikrobenbeständige Werkstoffe enthaltend (Polyharnstoff)-polyurethane gemäß Anspruch 4 oder 5.

7. Schuhsohle enthaltend (Polyharnstoff)polyurethane gemäß Anspruch 4 oder 5.

8. Verwendung der (Polyharnstoff)polyurethane gemäß Anspruch 4 oder 5 zur Herstellung von Sicherheitskleidung.

9. Verwendung der (Polyharnstoff)polyurethane gemäß Anspruch 4 oder 5 im Automobilbau.

## Claims

1. A process for preparing oil and petrol-resistant cellular to solid (polyurea)polyurethanes by reacting a reaction mixture consisting of
A1) 95 - 70 wt.%, with respect to the sum of A1) and A2), of a polyetherpolyol component with a number average molecular weight of 1000 to 8000 g/mol and with a hydroxyl functionality of 2.0 or a mixture with an average hydroxyl functionality of 2.02 to 2.95, consisting of
a) at least one polyetherdiol in the hydroxyl value range 10 to 115 which has been prepared by propoxylation of a difunctional starter and subsequent ethoxylation of the propoxylation product while maintaining a ratio by weight of propylene oxide to ethylene oxide of 60:40 to 85:15 and
b) at least one polyethertriol in the hydroxyl value range 12 to 56 which has been prepared by propoxylation of a trifunctional starter and subsequent ethoxylation of the propoxylation product while maintaining a ratio by weight of propylene oxide to ethylene oxide of 60:40 to 85:15, optionally containing a filler based on styrene/acrylonitrile copolmers, polyureas or polyhydrazocarbonamides in an amount of up to 20 wt.%, with respect to the total weight of component b),
A2) 5 to 30 wt.%, with respect to the sum of A1) and A2), of a polyesterpolyol component with a number average molecular weight of 1000 to 6000 g/mol, which consists of polyesterpolyols which contain 20 to 50 mol.% of units derived from adipic acid, 0 to 20 mol.% of units derived from glutaric acid, 0 to 10 mol.% of units derived from succinic acid, 10 to 30 mol.% of units derived from neopentyl glycol, 10 to 40 mol.% of units derived from hexanediol, 0 to 15 mol.% of units derived from ethanediol and 0 to 5 mol.% of units derived from butanediol,
B) a polyisocyanate component,
C) chain-extending agents,
optionally
D) blowing agents and
E) activators and other auxiliary substances and additives,
wherein the starting materials are reacted while maintaining the isocyanate index at a value of 70 to 130.

2. A process according to Claim 1, in which component A2) is used as a constituent of polyisocyanate component B).

3. A process according to Claim 1, in which components A1), A2), C) and optionally D) and E) are combined to give a polyol component and this is reacted with polyisocyanate component B).

4. Oil and petrol resistant cellular to solid (polyurea)polyurethanes obtainable in accordance with one of Claims 1 to 3.

5. Transparent (polyurea)polyurethanes in accordance with Claim 4.

6. Materials containing (polyurea)polyurethanes in accordance with Claim 4 or 5 which are resistant to hydrolysis and the action of microbes.

7. Shoe soles containing (polyurea)polyurethanes in accordance with Claim 4 or 5.

8. Use of (polyurea)polyurethanes in accordance with Claim 4 or 5 for producing safety clothing.

9. Use of (polyurea)polyurethanes in accordance with Claim 4 or 5 in the construction of cars.

## Revendications

1. Procédé de préparation de (polyurée)polyuréthane alvéolé à plein, résistant à l'huile et à l'essence par réaction d'un mélange réactionnel à partir de
A1) 95 - 70 % en poids, rapporté à la somme de A1) et A2), d'un composant polyétherpolyol avec une masse moléculaire moyenne en nombre de 1000 à 8000 g/mole et avec une fonctionnalité hydroxyle de 2,0 ou d'un mélange avec une fonctionnalité hydroxyle moyenne de 2,02 à 2,95, constitué
a) d'au moins un polyétherdiol de la plage d'indice hydroxyle 10 à 115, qui est préparé par propoxylation d'un produit de départ difonctionnel et éthoxylation suivante du produit de propoxylation en observant un rapport en poids d'oxyde de propylène à l'oxyde d'éthylène de 60: 40 à 85: 15 et
b) d'au moins un polyéthertriol de la plage d'indice hydroxyle 12 à 56, contenant éventuellement des charges, à base de copolymérisats styrène-acrylonitrile, de polyurées ou de polyhydrazocarbonamides en une quantité de jusqu'à 20 % en poids rapporté au poids total du composant b), lequel est préparé par propoxylation d'un produit de départ trifonctionnel et époxylation suivante du produit de propoxylation en observant un rapport en poids de l'oxyde de propylène à l'oxyde d'éthylène de 60 : 40 à 85 15,
A2) 5 à 30 % en poids, rapporté à la somme de A1) et A2), d'un composant polyesterpolyol avec une masse moléculaire moyenne en nombre de 1000 à 6000 glmole, qui est constitué de polyesterpolyols qui présentent 20 à 50 % en moles d'unités dérivées d'acide adipique, 0 à 20 % en moles d'unités dérivées d'acide glutarique, 0 à 10 % en moles d'unités dérivées d'acide succinique, 10 à 30 % en moles d'unités dérivées de néopentylglycol, 10 à 40 % en moles d'unités dérivées d'hexanediol, 0 à 15 % en moles d'unités dérivées d'éthanediol et 0 à 5 % en moles d'unités dérivées de butanediol,
B) un composant polyisocyanate,
C) des agents d'allongement de chaîne,
éventuellement
D) des agents moussants et
E) des activateurs et d'autres agents auxiliaires et d'addition,
le matériau de départ étant amené en réaction en maintenant l'indice isocyanate de 70 à 130.

2. Procédé selon la revendication 1, selon lequel le composant A2) est utilisé comme constituant du composant polyisocyanate B).

3. Procédé selon la revendication 1, dans lequel les composants A1), A2), C) et éventuellement D) et E) sont combinés à un composant polyol et on fait réagir celui-ci avec le composant polyisocyanate B).

4. (Polyurée)polyuréthane alvéolé à plein, résistant à l'huile et à l'essence susceptible d'être préparé selon une des revendications 1 à 3.

5. (Polyurée)polyuréthane transparent selon la revendication 4.

6. Produit résistant à l'hydrolyse et aux microbes contenant le (polyurée)polyuréthane selon la revendication 4 ou 5.

7. Semelle de chaussure contenant le (polyurée)polyuréthane selon la revendication 4 ou 5.

8. Utilisation du (polyurée)polyuréthane selon la revendication 4 ou 5 pour la préparation de vêtement de sécurité.

9. Utilisation du (polyurée)polyuréthane selon la revendication 4 et 5 dans la construction automobile.
